(19) Europäisches Patentamt / European Patent Office / Office européen des brevets

(11) **EP 4 775 626 A1**

(12) **EUROPEAN PATENT APPLICATION**
published in accordance with Art. 153(4) EPC

(43) Date of publication:
**15.07.2026 Bulletin 2026/29**

(21) Application number: **24862392.8**

(22) Date of filing: **29.05.2024**

(51) International Patent Classification (IPC):
*C08J 11/16* (2006.01)   *B29B 17/04* (2006.01)
*C08B 16/00* (2006.01)   *C08J 3/12* (2006.01)
*C08L 1/00* (2006.01)

(52) Cooperative Patent Classification (CPC):
**B29B 17/04; C08B 16/00; C08J 3/12; C08J 11/16; C08L 1/00**

(86) International application number:
**PCT/JP2024/019694**

(87) International publication number:
**WO 2025/052735 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 JP 2023143996**

(71) Applicant: **Futamura Kagaku Kabushiki Kaisha**
**Nakamura-ku**
**Nagoya-shi**
**Aichi 450-0002 (JP)**

(72) Inventors:
• **IWATA Ippei**
**Ogaki-shi Gifu 503-0932 (JP)**
• **YAMAZAKI Asuka**
**Ogaki-shi Gifu 503-0932 (JP)**

(74) Representative: **TBK**
**Bavariaring 4-6**
**80336 München (DE)**

(54) **METHOD FOR PRODUCING REGENERATED CELLULOSE-DERIVED CELLULOSE DISPERSION LIQUID AND REGENERATED CELLULOSE-DERIVED CELLULOSE MOLDED BODY, AND REGENERATED CELLULOSE-DERIVED CELLULOSE DISPERSION LIQUID, REGENERATED CELLULOSE-DERIVED CELLULOSE BEADS, AND REGENERATED CELLULOSE-DERIVED CELLULOSE MOLDED BODY**

(57)   The present invention relates to a method for producing a cellulose dispersion liquid and a cellulose molded body, in which an appropriate regenerated cellulose including cellophane or the like that is difficult to recycle can be used as a dispersion liquid raw material. The methods use a regenerated cellulose as a dispersion liquid raw material, include a pulverization step (S1) of pulverizing the dispersion liquid raw material, a depoly- merization step (S2) of lowering a degree of polymerization of a pulverized raw material obtained through the pulverization step to 350 or less, and a micronization step (S3) of micronizing a depolymerized cellulose obtained through the depolymerization step to obtain a cellulose dispersion liquid, and further includes a molding step (S4) of drying the cellulose dispersion liquid obtained through the micronization step to obtain a molded body.

Fig. 1

PULVERIZATION STEP (S1)

REGENERATED CELLULOSE

PULVERIZATION

PULVERIZED RAW MATERIAL

DEPOLYMERIZATION STEP (S2)

SODIUM HYPOCHLORITE

DEPOLYMERIZATION

DEPOLYMERIZED CELLULOSE

MICRONIZATION STEP (S3)

MICRONIZATION

CELLULOSE DISPERSION LIQUID (MICRONIZED CELLULOSE) — 11

MOLDING STEP (S4)

DRYING

CELLULOSE MOLDED BODY — 21

COLLECTION STEP (S5)

COLLECTION

10

20

## Description

Technical Field

The present invention relates to a method for producing a regenerated cellulose-derived cellulose dispersion liquid and a regenerated cellulose-derived cellulose molded body, a regenerated cellulose-derived cellulose dispersion liquid, a regenerated cellulose-derived cellulose bead, and a regenerated cellulose-derived cellulose molded body.

Background Art

In general, regenerated cellulose is produced by a viscose process or the like, in which cellulose fibers contained in a raw material such as pulp are derivatized with a chemical agent, dissolved in a solvent to produce viscose, and then coagulated. Since the regenerated cellulose thus obtained is derived from a natural material and has properties such as biodegradability, its demand as a product has been increasing. It is molded into an appropriate molded body such as a fibrous, film-like, or spherical form, and processed into various products such as paper products, clothing, and sanitary goods.

In recent years, in view of issues such as environmental burdens associated with waste liquid treatment of the chemical agent used in the viscose process and exhaust gas treatment generated during the manufacturing process, a method has been proposed in which an ionic liquid is used instead of carrying out the viscose process to directly dissolve a cellulose material and produce regenerated cellulose (see, for example, Patent Literature 1). This method for producing regenerated cellulose has a fewer number of steps and improves work efficiency compared with the viscose process, and also eliminates the need for exhaust gas treatment carried out in the viscose process, thereby reducing environmental burdens.

Meanwhile, with the promotion of the Sustainable Development Goals (SDGs), initiatives aimed at realizing a circular society with environmental considerations have been actively carried out in various fields. Among environmentally conscious initiatives, recycling, which reuses discarded products after use and the like as resources, is well known. Accordingly, the use as a recycled raw material is also required for products made of regenerated cellulose.

However, regenerated cellulose does not have thermoplasticity, and since the method for dissolving it is limited, it is difficult to recycle. In particular, in cellophane, which is a film product of regenerated cellulose, a softening agent such as glycerin may be contained as an additive. Therefore, when cellophane is recycled as a raw material for regenerated cellulose, it becomes a problem that the softening agent in the cellophane remains in the ionic liquid and causes process abnormalities. For this reason, cellophane has been disposed of without being recycled.

Citation List

Patent Literature

Patent Literature 1: Japanese Translation of PCT International Application Publication No. 2016-537461

Summary of Invention

Technical Problem

The present invention has been made in view of the above points, and relates to a method for producing a cellulose dispersion liquid, in which an appropriate regenerated cellulose including cellophane or the like that is difficult to recycle can be used as a raw material, and a method for producing a cellulose molded body, using the cellulose dispersion liquid.

Solution to Problem

That is, a first invention relates to a method for producing a regenerated cellulose-derived cellulose dispersion liquid, using a regenerated cellulose as a dispersion liquid raw material, the method comprising: a pulverization step of pulverizing the dispersion liquid raw material; a depolymerization step of lowering a degree of polymerization of a pulverized raw material obtained through the pulverization step to 350 or less; and a micronization step of micronizing a depolymerized cellulose obtained through the depolymerization step to obtain a cellulose dispersion liquid.

A second invention relates to the method for producing a regenerated cellulose-derived cellulose dispersion liquid according to the first invention, wherein a degree of polymerization of the regenerated cellulose as the dispersion liquid raw material is 600 or less.

A third invention relates to the method for producing a regenerated cellulose-derived cellulose dispersion liquid according to the first or second invention, wherein a degree of polymerization of the pulverized raw material is lowered by sodium hypochlorite having an available chlorine concentration of 0.13% or more in the depolymerization step.

A fourth invention relates to the method for producing a regenerated cellulose-derived cellulose dispersion liquid according to the first or second invention, wherein a degree of polymerization of the pulverized raw material is lowered by sodium hypochlorite having an available chlorine concentration of 3% or more in the depolymerization step.

A fifth invention relates to a cellulose dispersion liquid, wherein a cationic demand of the cellulose dispersion liquid obtained by the production method according to the first or second invention is 4.0 $\mu$eq/gcell or more per 1 g of cellulose.

A sixth invention relates to a cellulose dispersion liquid, wherein a cationic demand of the cellulose dispersion liquid obtained by the production method according to the third invention is 4.0 $\mu$eq/gcell or more per 1 g of cellulose.

A seventh invention relates to a cellulose dispersion liquid, wherein a cationic demand of the cellulose dispersion liquid obtained by the production method according to the fourth invention is 50.0 $\mu$eq/gcell or more per 1 g of cellulose.

An eighth invention relates to a method for producing a regenerated cellulose-derived cellulose molded body, the method comprising a molding step of drying and molding the cellulose dispersion liquid obtained by the production method according to the first invention to obtain a regenerated cellulose-derived cellulose molded body.

A ninth invention relates to the method for producing a regenerated cellulose-derived cellulose molded body according to the eighth invention, wherein a degree of polymerization of the regenerated cellulose as the dispersion liquid raw material is 600 or less.

A tenth invention relates to the method for producing a regenerated cellulose-derived cellulose molded body according to the eighth or ninth invention, wherein a degree of polymerization of the pulverized raw material is lowered by sodium hypochlorite having an available chlorine concentration of 0.13% or more in the depolymerization step.

An eleventh invention relates to the method for producing a regenerated cellulose-derived cellulose molded body according to the eighth or ninth invention, wherein a degree of polymerization of the pulverized raw material is lowered by sodium hypochlorite having an available chlorine concentration of 3% or more in the depolymerization step.

A twelfth invention relates to a regenerated cellulose-derived cellulose bead which is a cellulose molded body obtained by the production method according to the tenth invention, wherein the cellulose molded body is a cellulose bead and has an average particle diameter (D50) of 50 $\mu$m or less.

A thirteenth invention relates to a regenerated cellulose-derived cellulose bead which is a cellulose molded body obtained by the production method according to the eleventh invention, wherein the cellulose molded body is a cellulose bead and has an average particle diameter (D50) of 10 $\mu$m or less.

A fourteenth invention relates to a regenerated cellulose-derived cellulose molded body which is a cellulose molded body obtained by the production method according to the tenth invention, wherein a molecular weight distribution index (Mw/Mn) obtained by dividing a weight average molecular weight (Mw) of the cellulose molded body by a number average molecular weight (Mn) thereof is 3.5 or less.

A fifteenth invention relates to a regenerated cellulose-derived cellulose molded body which is a cellulose molded body obtained by the production method according to the eleventh invention, wherein a molecular weight distribution index (Mw/Mn) obtained by dividing a weight average molecular weight (Mw) of the cellulose molded body by a number average molecular weight (Mn) thereof is 1.6 or less.

Advantageous Effects of Invention

According to the first invention, that is, a method for producing a regenerated cellulose-derived cellulose dispersion liquid, using a regenerated cellulose as a dispersion liquid raw material, the method comprising: a pulverization step of pulverizing the dispersion liquid raw material; a depolymerization step of lowering a degree of polymerization of a pulverized raw material obtained through the pulverization step to 350 or less; and a micronization step of micronizing a depolymerized cellulose obtained through the depolymerization step to obtain a cellulose dispersion liquid, it is possible to effectively use an appropriate regenerated cellulose including cellophane or the like that is difficult to recycle as a dispersion liquid raw material to produce a cellulose dispersion liquid.

According to the second invention, that is, the method for producing a regenerated cellulose-derived cellulose dispersion liquid according to the first invention, wherein a degree of polymerization of the regenerated cellulose as the dispersion liquid raw material is 600 or less, the degree of polymerization of the regenerated cellulose as the dispersion liquid raw material is already at or below a certain level, thereby shortening the time required for each step and improving production efficiency.

According to the third invention, that is, the method for producing a regenerated cellulose-derived cellulose dispersion liquid according to the first or second invention, wherein a degree of polymerization of the pulverized raw material is lowered by sodium hypochlorite having an available chlorine concentration of 0.13% or more in the depolymerization step, the degree of polymerization of the regenerated cellulose can be lowered efficiently.

According to the fourth invention, that is, the method for producing a regenerated cellulose-derived cellulose dispersion liquid according to the first or second invention, wherein a degree of polymerization of the pulverized raw material is lowered by sodium hypochlorite having an available chlorine concentration of 3% or more in the depolymerization step, the degree of polymerization of the regenerated cellulose can be lowered more efficiently.

According to the fifth invention, that is, a regenerated cellulose-derived cellulose dispersion liquid, wherein a cationic demand of the cellulose dispersion liquid obtained by the production method according to the first or second invention is 4.0 μeq/gcell or more per 1 g of cellulose, the cellulose dispersion liquid can be made to have high dispersibility.

According to the sixth invention, that is, a regenerated cellulose-derived cellulose dispersion liquid, wherein a cationic demand of the cellulose dispersion liquid obtained by the production method according to the third invention is 4.0 μeq/gcell or more per 1 g of cellulose, the cellulose dispersion liquid can be made to have high dispersibility.

According to the seventh invention, that is, a regenerated cellulose-derived cellulose dispersion liquid, wherein a cationic demand of the cellulose dispersion liquid obtained by the production method according to the fourth invention is 50.0 μeq/gcell or more per 1 g of cellulose, the cellulose dispersion liquid can be made to have higher dispersibility.

According to the eighth invention, that is, a method for producing a regenerated cellulose-derived cellulose molded body, the method comprising a molding step of drying and molding the cellulose dispersion liquid obtained by the production method according to the first invention to obtain a regenerated cellulose-derived cellulose molded body, it is possible to effectively use an appropriate regenerated cellulose including cellophane or the like that is difficult to recycle as a raw material to produce a cellulose molded body.

According to the ninth invention, that is, the method for producing a regenerated cellulose-derived cellulose molded body according to the eighth invention, wherein a degree of polymerization of the regenerated cellulose as the dispersion liquid raw material is 600 or less, the degree of polymerization of the regenerated cellulose as the dispersion liquid raw material is already at or below a certain level, thereby shortening the time required for each step and improving production efficiency.

According to the tenth invention, that is, the method for producing a regenerated cellulose-derived cellulose molded body according to the eighth or ninth invention, wherein a degree of polymerization of the pulverized raw material is lowered by sodium hypochlorite having an available chlorine concentration of 0.13% or more in the depolymerization step, the degree of polymerization of the regenerated cellulose can be lowered efficiently.

According to the eleventh invention, that is, the method for producing a regenerated cellulose-derived cellulose molded body according to the eighth or ninth invention, wherein a degree of polymerization of the pulverized raw material is lowered by sodium hypochlorite having an available chlorine concentration of 3% or more in the depolymerization step, the degree of polymerization of the regenerated cellulose can be lowered efficiently.

According to the twelfth invention, that is, a regenerated cellulose-derived cellulose bead which is a cellulose molded body obtained by the production method according to the tenth invention, wherein the cellulose molded body is a cellulose bead and has an average particle diameter (D50) of 50 μm or less, the cellulose bead has good slipperiness and little roughness or squeakiness, resulting in a good texture.

According to the thirteenth invention, that is, a regenerated cellulose-derived cellulose bead which is a cellulose molded body obtained by the production method according to the eleventh invention, wherein the cellulose molded body is a cellulose bead and has an average particle diameter (D50) of 10 μm or less, the cellulose bead has good slipperiness and little roughness or squeakiness, resulting in a better texture.

According to the fourteenth invention, that is, a regenerated cellulose-derived cellulose molded body which is a cellulose molded body obtained by the production method according to the tenth invention, wherein a molecular weight distribution index (Mw/Mn) obtained by dividing a weight average molecular weight (Mw) of the cellulose molded body by a number average molecular weight (Mn) thereof is 3.5 or less, the molecular weight distribution index (Mw/Mn) is sharp, resulting in a homogeneous micronized cellulose with superior processability, thereby enabling the provision of a regenerated cellulose-derived cellulose molded body having a small particle diameter.

According to the fifteenth invention, that is, a regenerated cellulose-derived cellulose molded body which is a cellulose molded body obtained by the production method according to the eleventh invention, wherein a molecular weight distribution index (Mw/Mn) obtained by dividing a weight average molecular weight (Mw) of the cellulose molded body by a number average molecular weight (Mn) thereof is 1.6 or less, the molecular weight distribution index (Mw/Mn) is sharper, resulting in a homogeneous micronized cellulose with superior processability, thereby enabling the provision of a regenerated cellulose-derived cellulose molded body having a small particle diameter.

Brief Description of Drawing

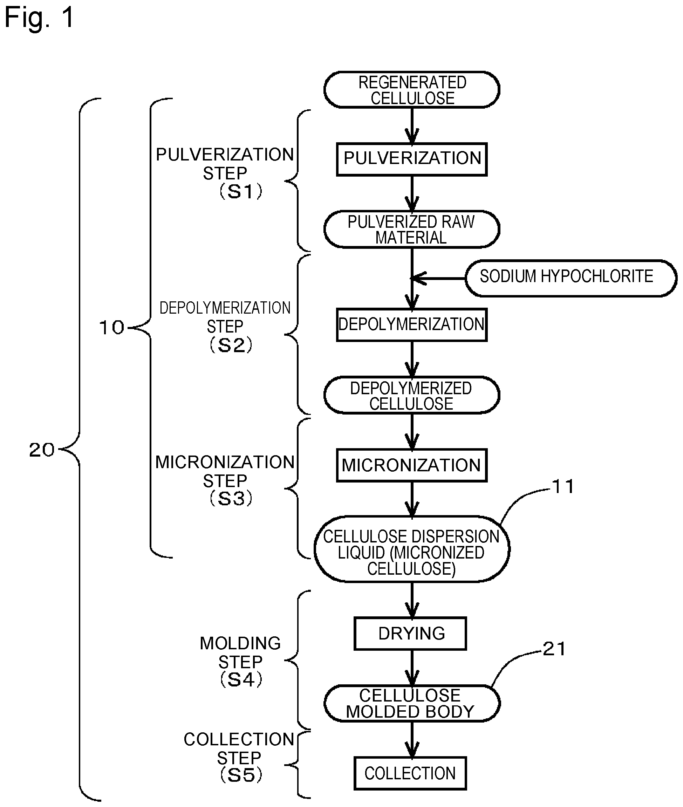

[Figure 1] Figure 1 is a schematic flow diagram of a method for producing a regenerated cellulose-derived cellulose dispersion liquid and a cellulose molded body according to one embodiment of the present invention.

Description of Embodiments

As shown in the schematic flow diagram of Figure 1, a method 10 for producing a regenerated cellulose-derived cellulose dispersion liquid according to one embodiment of the present invention is a method for producing a cellulose dispersion liquid 11 using a regenerated cellulose as a raw material. This method 10 for producing a cellulose dispersion liquid includes a pulverization step (S1), a depolymerization step (S2), and a micronization step (S3). Then, a method 20 for producing a regenerated cellulose-derived cellulose molded body further includes a molding step (S4), thereby obtaining a cellulose molded body 21.

The regenerated cellulose serves as a main raw material (dispersion liquid raw material) of the cellulose dispersion liquid produced by the production method of the present invention. The lower the degree of polymerization of the regenerated cellulose, the easier it becomes to fibrillate and process the cellulose, thereby improving production efficiency. If the degree of polymerization of the regenerated cellulose is too high, the cellulose becomes difficult to fibrillate, which may make it difficult to produce the cellulose dispersion liquid or the cellulose molded body. For this reason, it is desirable that the degree of polymerization of the regenerated cellulose as the dispersion liquid raw material be 600 or less. In general, the degree of polymerization of a regenerated cellulose produced by the viscose process is about 200 to 300, and thus it can be suitably used as a raw material for the production method of the present invention. In addition, the degree of polymerization of a regenerated cellulose obtained by a method for producing a regenerated cellulose using a cellulose solvent such as an ionic liquid is about 600, and thus it is suited as a raw material for the production method of the present invention.

The regenerated cellulose as the dispersion liquid raw material to be used may be a material having an appropriate form such as fibrous, film-like, or spherical, which is produced by a known method, or a regenerated cellulose product obtained by processing the produced regenerated cellulose. These regenerated celluloses are type II celluloses having a type II crystal structure.

Examples of the method for producing the regenerated cellulose include a method in which cellulose fibers are chemically derivatized and then dissolved in a solvent or the like to produce regenerated cellulose, such as the viscose process, and a method in which cellulose fibers are dissolved in an ionic liquid to produce regenerated cellulose. Also, examples of the regenerated cellulose product include paper products, clothing, and sanitary goods processed from molded bodies such as rayon, cellophane, and cellulose beads.

When using a regenerated cellulose as the dispersion liquid raw material, from the viewpoint of reducing environmental burdens, it is preferable to use a regenerated cellulose product or the like as a recycled raw material. In the recycled raw material of regenerated cellulose, scraps or the like generated in the manufacturing process of regenerated cellulose molded bodies or products are also included. Since regenerated cellulose products and scraps or the like have conventionally been discarded as materials that are difficult to recycle, using them as recycled raw materials can greatly contribute to the reduction of environmental burdens.

The pulverization step (S1) is a step of pulverizing the regenerated cellulose as the dispersion liquid raw material to obtain a pulverized raw material. This pulverization step is intended to improve the reactivity of the regenerated cellulose (pulverized raw material) in the depolymerization step (S2) described later by finely pulverizing the regenerated cellulose as the dispersion liquid raw material. The pulverized raw material obtained through the pulverization step is preferably pulverized so that the regenerated cellulose has a size of 500 $\mu$m or less. The size of the regenerated cellulose is measured in accordance with JIS Z 8825 (2013) using a laser diffraction/scattering particle size distribution measurement apparatus. If the pulverized regenerated cellulose is too large, the reactivity in the depolymerization step (S2) described later may be insufficient, which may reduce productivity. In this pulverization step, a known pulverization method, such as dry pulverization or wet pulverization, can be used as appropriate.

The depolymerization step (S2) is a step of depolymerizing the pulverized raw material obtained through the pulverization step to obtain a depolymerized cellulose whose degree of polymerization has been lowered to 350 or less. This depolymerization step weakens the structure of the pulverized regenerated cellulose by depolymerizing the pulverized raw material, thereby providing a state in which the cellulose is easily fibrillated (depolymerized cellulose). The depolymerized cellulose obtained through the depolymerization step is adjusted so that its degree of polymerization is 350 or less using a chemical agent such as sodium hypochlorite or an enzyme. If the degree of polymerization of the depolymerized cellulose is too high, the ease of fibrillation in the micronization step (S3) described later may be insufficient, which may reduce productivity.

In the depolymerization step, it is preferable to use sodium hypochlorite for depolymerizing the pulverized raw material. Sodium hypochlorite depolymerizes cellulose through a $\beta$-alkoxy elimination reaction caused by oxidation of the hydroxyl groups at the 2- and 3-positions of cellulose to carbonyl groups. Sodium hypochlorite is suitably used because it is easy to handle and can efficiently lower the degree of polymerization of the regenerated cellulose by controlling pH and temperature. In addition, the higher the concentration of sodium hypochlorite, the easier it is to lower the degree of polymerization of the regenerated cellulose. In particular, an available chlorine concentration of 0.13% or more, more preferably an available chlorine concentration of 3% or more, can lower the degree of polymerization of the regenerated cellulose more efficiently.

The micronization step (S3) is a step of fibrillating and micronizing the depolymerized cellulose obtained through the depolymerization step to produce a micronized cellulose, thereby obtaining the cellulose dispersion liquid 11. The fibrillation of the depolymerized cellulose is performed by mechanical (physical) fibrillation. The mechanical (physical) fibrillation is carried out by a known method using, for example, a homogenizer or a water jet. The micronized cellulose obtained in this manner is not subjected to fibrillation using a chemical agent (chemical fibrillation), and thus forms a dispersion liquid of a chemically unmodified (non-modified) cellulose particle.

Here, since the regenerated cellulose as the dispersion liquid raw material has its degree of polymerization lowered in the depolymerization step, it can be easily fibrillated and micronized even without applying high pressure. In this manner, because the depolymerized cellulose can be easily micronized, there is an advantage also in terms of the facilities in the micronization step.

The micronization of the depolymerized cellulose may be carried out in multiple stages. For example, after a preliminary fibrillation with a mixer, a main fibrillation can be carried out using a homogenizer, thereby obtaining a uniform micronized cellulose with a small particle diameter. In addition, a preliminary fibrillation can suppress problems such as clogging of the fibrillation apparatus by the depolymerized cellulose, which is advantageous from the viewpoint of facility protection. The preliminary fibrillation is carried out using a mixer, a refiner, or the like, by a known method. The micronization of the depolymerized cellulose may reduce the average particle diameter to the nanoscale or several hundred nanometers, and an average particle diameter of about 2 to 800 nm, more preferably 500 nm or less, improves the transparency of the dispersion liquid of the micronized cellulose (cellulose dispersion liquid). The cellulose dispersion liquid can be used as a coating agent by applying it to films, paper, or other three-dimensional objects, and the dispersion liquid with high transparency is suitable as a coating agent. In addition, the high transparency of the cellulose dispersion liquid also provides excellent processability when it is formed into a cellulose molded body.

The molding step (S4) is a step of drying the cellulose dispersion liquid (micronized cellulose) obtained through the micronization step to obtain the cellulose molded body 21. The micronized cellulose in the form of a dispersion liquid is aggregated during drying by spray drying, thereby being molded into a granular (bead) molded body. Since this molded body is molded using a regenerated cellulose as the dispersion liquid raw material, it is a cellulose molded body derived from a regenerated cellulose. In the molding step, it is preferable that the viscosity of the cellulose dispersion liquid, measured using a B-type viscometer in accordance with JIS Z 8803 (2011) at a shear rate of 4.0/sec, be 15000 mPa·s or less. If the viscosity of the cellulose dispersion liquid is higher than 15000 mPa·s, the flowability of the solution decreases, which may cause clogging of the supply piping or spray drying nozzle of the spray drying apparatus.

In addition, as for the conditions of spray drying, the air pressure is 0.025 to 0.6 MPa. If the air pressure for spray drying is insufficient, the cellulose fine particles are not sufficiently micronized, resulting in a large particle diameter and deterioration in physical properties and texture. On the other hand, when the air pressure is higher than 0.6 MPa, the air generating apparatus becomes excessively large, which is not practical.

Also, in the method for producing a regenerated cellulose-derived cellulose molded body of the present invention, a collection step (S5) is carried out after the molding step (S4), if necessary. The collection step is a step of collecting proper particles of the cellulose molded body by removing unnecessary particles from the granular cellulose molded body (cellulose bead) molded in the molding step. The collection means is not particularly limited as long as proper particles can be collected, and for example, a known collection means such as a bag filter or a cyclone dust collector can be used.

As described above, in the production method of the present invention, a regenerated cellulose as the dispersion liquid raw material is pulverized to 500 $\mu$m or less in the pulverization step (S1) to obtain a pulverized raw material, the degree of polymerization of the pulverized raw material is adjusted to 350 or less in the depolymerization step (S2), a cellulose dispersion liquid is obtained in the micronization step (S3), and furthermore, a cellulose molded body is obtained through the molding step (S4). Therefore, it is possible to obtain a cellulose dispersion liquid or a cellulose molded body using a regenerated cellulose as the dispersion liquid raw material. In particular, since even cellophane or the like, which has conventionally been difficult to recycle, can be used as a recycled raw material for the dispersion liquid raw material, it is possible to greatly contribute to the reduction of environmental burdens. In addition, since this regenerated cellulose-derived cellulose molded body is a molded body of unmodified cellulose on which chemical fibrillation has not been carried out, it is possible to reduce the amount of an environmentally burdensome chemical agent used as compared with conventional cellulose molded bodies.

For the regenerated cellulose-derived cellulose dispersion liquid or molded body obtained by the production method of the present invention, it is favorable to use sodium hypochlorite having an available chlorine concentration of 0.13% or more, preferably 3% or more, in the depolymerization step.

When the available chlorine concentration of sodium hypochlorite is high, the cationic demand of the cellulose dispersion liquid increases. The term "cationic demand" refers to the amount of a cationic reagent required to neutralize colloids, particles having a negative charge in a fine particle dispersion region (particle diameter 1 nm to several hundred $\mu$m), and the like to the isoelectric charge, and serves as an index of the dispersibility of the cellulose fine particles in the cellulose dispersion liquid. It can be said that the larger the cationic demand, the better the dispersibility, and the more uniform the cellulose dispersion liquid. The cationic demand of the cellulose dispersion liquid is preferably 4.0 $\mu$eq/gcell or more per 1 g of cellulose, and more preferably 50.0 $\mu$eq/gcell or more.

The cellulose dispersion liquid can be used as a coating agent for films, sheets, resin molded bodies, and the like, and can impart various functions such as improved strength, gas barrier properties, and hydrophilicity. Therefore, when the dispersibility of the cellulose dispersion liquid is good, the coating layer tends to be uniform when used as a coating agent, resulting in effective imparting of functionality and improved handling, which is advantageous.

Also, when the available chlorine concentration of sodium hypochlorite is high, the molecular weight distribution index (Mw/Mn) obtained by dividing the weight average molecular weight (Mw) of the cellulose molded body by the number average molecular weight (Mn) thereof decreases. The molecular weight distribution index (Mw/Mn) serves as an index of the sharpness of the molecular weight distribution, and the sharper the molecular weight distribution, the better the processability, enabling the provision of a cellulose molded body having a small particle diameter. The molecular weight distribution index (Mw/Mn) of the cellulose molded body is preferably 3.5 or less, and the molecular weight distribution index (Mw/Mn) is more preferably 1.6 or less.

In particular, for the cellulose molded body in the form of cellulose beads, in the case where the available chlorine concentration of sodium hypochlorite in the depolymerization step is 0.13% or more, the average particle diameter at a cumulative value of 50% in the particle size distribution (D50) is 50 $\mu$m or less, and in a more preferred case where the available chlorine concentration of sodium hypochlorite is more preferably 3% or more, the average particle diameter (D50) is 10 $\mu$m or less. The average particle diameter (D50) is the median diameter (mid-diameter), and when the average particle diameter (D50) is 50 $\mu$m or less, a cellulose bead is obtained that has good slipperiness and little roughness or squeakiness, resulting in a good texture, and when the average particle diameter (D50) is 10 $\mu$m or less, an even better texture is obtained.

Examples

[Fabrication of Regenerated Cellulose-Derived Cellulose Dispersion Liquid and Molded Body]

The regenerated cellulose-derived cellulose dispersion liquids and molded bodies of each of the following Trial Production Examples and Comparative Examples were fabricated under the following conditions in accordance with the flow diagram of Figure 1.

As the regenerated cellulose, the following raw materials were used. A cellophane film produced by the viscose process (manufactured by Futamura Chemical Co., Ltd., "PUT") was used as a regenerated cellulose 1 (C1). A cellulose film was used as a regenerated cellulose 2 (C2) that was obtained by adding a pulverized dissolving pulp to a TBAA/DMSO mixed solvent so as to achieve a concentration of 10%, dissolving it with a kneading machine (manufactured by Seiwa Giken Co., Ltd.) while heating so that the contents reached 50°C or higher, extruding the obtained cellulose solution through a T-die (manufactured by Research Laboratory of Plastics Technology Co., Ltd.) into a water bath to form a film and coagulate, and then passing it through a cellophane production line. The degree of polymerization of the regenerated cellulose 1 (C1) was 239, and the degree of polymerization of the regenerated cellulose 2 (C2) was 559.

<Trial Production Example 1>

The regenerated cellulose 1 (C1) was pulverized to 500 $\mu$m using a hammer crusher (manufactured by Sansho Industry Co., Ltd.) (pulverization step). To 8 g of the pulverized raw material obtained by pulverization, 200 ml of sodium hypochlorite (1% solution, available chlorine concentration 0.13%) was added, and the mixture was allowed to react in a water bath at 55°C for 30 minutes to obtain a depolymerized cellulose with the degree of polymerization lowered to 196 (depolymerization step). The depolymerized cellulose obtained by depolymerization was washed by replacement with ion exchanged water, and then 400 ml of ion exchanged water was added to form a dispersion liquid, which was preliminarily fibrillated using a mixer (manufactured by PRIMIX Corporation). Thereafter, the dispersion liquid was micronized under a pressure of 70 MPa using a homogenizer (manufactured by SMT Co., Ltd.) to obtain a regenerated cellulose-derived cellulose dispersion liquid of Trial Production Example 1. This cellulose dispersion liquid was spray dried using a spray dryer (manufactured by Tokyo Rikakikai Co., Ltd.) at an air pressure of 0.2 MPa (treatment amount 300 ml/hr) (molding step). Particle collection was performed using a cyclone dust collector (manufactured by Tokyo Rikakikai Co., Ltd.) (collection step), thereby obtaining a regenerated cellulose-derived cellulose molded body of Trial Production Example 1.

<Trial Production Example 2>

A regenerated cellulose-derived cellulose dispersion liquid and a regenerated cellulose-derived cellulose molded body of Trial Production Example 2 were obtained in the same manner as in Trial Production Example 1, except that the depolymerized cellulose was made to have a degree of polymerization of 74 lowered by using sodium hypochlorite as a 10% solution having an available chlorine concentration of 1.30% in the depolymerization step.

<Trial Production Example 3>

A regenerated cellulose-derived cellulose dispersion liquid and a regenerated cellulose-derived cellulose molded body of Trial Production Example 3 were obtained in the same manner as in Trial Production Example 1, except that the depolymerized cellulose was made to have a degree of polymerization of 62 lowered by using sodium hypochlorite as a 20% solution having an available chlorine concentration of 3.00% in the depolymerization step.

<Trial Production Example 4>

A regenerated cellulose-derived cellulose dispersion liquid and a regenerated cellulose-derived cellulose molded body of Trial Production Example 4 were obtained in the same manner as in Trial Production Example 1, except that the depolymerized cellulose was made to have a degree of polymerization of 38 lowered by using sodium hypochlorite as a 100% solution having an available chlorine concentration of 12.00% in the depolymerization step. Note that the viscosity measured using a B-type viscometer (manufactured by EKO Instruments Co., Ltd.) under conditions of a shear rate of 4.0/sec, a measurement temperature of 25°C, and a measurement time of 1 minute was 13607 mPa·s.

<Trial Production Example 5>

A regenerated cellulose-derived cellulose dispersion liquid and a regenerated cellulose-derived cellulose molded body of Trial Production Example 5 were obtained in the same manner as in Trial Production Example 1, except that the regenerated cellulose 2 (C2) was used as the dispersion liquid raw material. Note that the degree of polymerization of the depolymerized cellulose obtained in the depolymerization step was 326.

<Trial Production Example 6>

A regenerated cellulose-derived cellulose dispersion liquid and a regenerated cellulose-derived cellulose molded body of Trial Production Example 6 were obtained in the same manner as in Trial Production Example 4, except that the regenerated cellulose 2 (C2) was used as the dispersion liquid raw material. Note that the degree of polymerization of the depolymerized cellulose obtained in the depolymerization step was 47.

<Comparative Example 1>

Comparative Example 1 was obtained in the same manner as in Trial Production Example 1, except that the depolymerization step was not performed.

<Comparative Example 2>

Comparative Example 2 was obtained in the same manner as in Trial Production Example 1, except that the depolymerization step, the micronization step, and the molding step were not performed.

<Comparative Example 3>

Comparative Example 3 was obtained in the same manner as in Trial Production Example 5, except that the depolymerization step, the micronization step, and the molding step were not performed.

For the performance evaluation of Trial Production Examples 1 to 6 and Comparative Examples 1 to 3, the average particle diameter (D50) and the molecular weight distribution index were measured.

[Cationic Demand]

For the measurement of cationic demand, a particle charge detector (manufactured by Voith Turbo Co., Ltd., "PCD-06 Premium") was used. The regenerated cellulose-derived cellulose dispersion liquids of Trial Production Examples and Comparative Examples were diluted to an arbitrary concentration, and 10 mL of each was introduced into the apparatus. Then, a 1/400 N DADMAC (diallyldimethylammonium chloride) solution was added dropwise, and the amount of the titrant consumed until the charge was neutralized was measured. Note that the dilution rate of each sample was adjusted so that the amount of the titrant consumed was 1 to 5 mL. The cationic demand (μeq/L) was calculated

according to the following expression (i), and then converted to the cationic demand per 1 g of cellulose ($\mu$eq/g-cell) according to the following expression (ii).

[Expression 1]

$$\text{Cationic Demand}_{(\mu eq/L)} = \frac{0.0025\,(eq/L) \times (\text{Amount of Titrant Consumed})\,(mL)}{10\,(mL) \times 1000000} \quad \cdots (i)$$

[Expression 2]

$$\text{Cationic Demand}_{(\mu eq/g\text{-}cell)} = \frac{\text{Cationic Demand}\,(\mu eq/L)}{(\text{Concentration of Diluted Solution})\,_{(\%)} \times 10} \quad \cdots (ii)$$

[Average Particle Diameter (D50)]

The average particle diameter (D50) was measured in accordance with JIS Z 8825 (2013). A laser diffraction/-scattering particle size distribution measurement apparatus (manufactured by MicrotracBEL Corp., "MT3200 II") was used for the measurement. For the measurement, a slurry was first formed by mixing each of the cellulose samples according to Trial Production Examples and Comparative Examples with ion exchanged water, and the slurry was charged into the sample circulation unit. The slurry was stirred so that, immediately before supply, no visually non-uniform portions were observed. Thereafter, the slurry was supplied to the measurement apparatus, and the particle diameter corresponding to a cumulative particle size distribution (volume basis) of 50% (D50) was measured using the following measurement parameters: refractive index of ion exchanged water: 1.33, optical transmittance of the particle to be measured: transmission, and measurement time: 10 seconds.

[Molecular Weight Distribution Index (Mw/Mn)]

Each of the cellulose samples according to Trial Production Examples and Comparative Examples and a TBAA/DMSO mixed solvent were added to a sample bottle so that the cellulose concentration became 0.1% by weight, and the mixture was stirred at room temperature overnight to dissolve. For the prepared sample, HPLC analysis was carried out using organic solvent system SEC (GPC) columns (manufactured by Resonac Corporation, "KD-804" and "KD-805" connected) (detector: RID (manufactured by Shimadzu Corporation, "RID-10A"), column temperature: 50°C, and eluent flow rate: 0.6 ml/min). The eluent used was a TBAA/DMSO mixed solvent.

[Degree of Polymerization]

The degree of polymerization was measured by a viscosity method using a copper ethylenediamine solution in the following manner. A dried cellulose sample was dissolved in a 0.5 M copper ethylenediamine solution (a solution 1) to form a solution 2. The viscosities of the solution 1 and the solution 2 were measured using a capillary viscometer. The viscosity of the solution 1 was defined as $\eta_1$ and the viscosity of the solution 2 was defined as $\eta_2$. Then, the intrinsic viscosity [$\eta$] of the cellulose sample was determined according to the following calculation expression, and the degree of polymerization DP was determined. Here, c represents the concentration of the cellulose sample (g/L).

$$\text{Intrinsic Viscosity } [\eta] = \{(\eta_2/\eta_1) - 1\}/c$$

Degree of Polymerization DP = Intrinsic Viscosity [$\eta$]/(8.8 $\times$ 10$^{-4}$)

[Table 1]

|  |  | Trial Production Example 1 | Trial Production Example 2 | Trial Production Example 3 | Trial Production Example 4 |
|---|---|---|---|---|---|
| Raw material | Type | C1 | C1 | C1 | C1 |
|  | Degree of polymerization | 239 | 239 | 239 | 239 |
| Depolymerization step | NaClO concentration (%) | 1 | 10 | 20 | 100 |
|  | Available chlorine concentration (%) | 0.13 | 1.30 | 3.00 | 12.00 |

|  | Degree of polymerization | 196 | 74 | 62 | 38 |
|---|---|---|---|---|---|
| Cationic demand (µeq/gcell) |  | 4.4 | 70.2 | 58.4 | 91.8 |
| Average particle diameter (µm) |  | 47.48 | 40.81 | 6.44 | 3.47 |
| Number average molecular weight (Mn) |  | 29144 | 6762 | 4586 | 4306 |
| Weight average molecular weight (Mw) |  | 90117 | 13313 | 6979 | 6436 |
| Molecular weight distribution index (Mw/Mn) |  | 3.09 | 1.97 | 1.52 | 1.49 |

[Table 2]

| | | Trial Production Example 5 | Trial Production Example 6 | Comparative Example 1 | Comparative Example 2 | Comparative Example 3 |
|---|---|---|---|---|---|---|
| Raw material | Type | C2 | C2 | C1 | C1 | C2 |
| | Degree of polymerization | 559 | 559 | 239 | 239 | 559 |
| Depolymerization step | NaClO concentration (%) | 1 | 100 | - | - | - |
| | Available chlorine concentration (%) | 0.13 | 12.00 | - | - | - |
| | Degree of polymerization | 326 | 47 | - | - | - |
| Cationic demand (μeq/gcell) | | 21.5 | 116.3 | 2.5 | 0.9 | Not measurable |
| Average particle diameter (μm) | | 45.03 | 3.63 | 96.45 | 258.3 | 453.5 |
| Number average molecular weight (Mn) | | 54533 | 4944 | 40140 | 51770 | 78850 |
| Weight average molecular weight (Mw) | | 175497 | 7224 | 170103 | 213634 | 423803 |
| Molecular weight distribution index (Mw/Mn) | | 3.22 | 1.46 | 4.24 | 4.13 | 5.37 |

[Results and Discussion]

The cellulose dispersion liquids of Trial Production Examples 1 to 6 each exhibited a larger cationic demand compared with the cellulose dispersion liquids of Comparative Examples 1 to 3, indicating that the cellulose fine particles were well dispersed in the cellulose dispersion liquids by the micronization step. In a comparison between the cellulose dispersion liquids of Trial Production Examples 1 to 4 and the cellulose dispersion liquids of Comparative Examples 1 and 2, the cellulose dispersion liquid of Trial Production Example 1 exhibited a cationic demand about twice as large as that of the cellulose dispersion liquid of Comparative Example 1, which was not subjected to the depolymerization step, and about four times as large as that of the cellulose dispersion liquid of Comparative Example 2, which was not subjected to the depolymerization step, the micronization step, or the molding step, showing a significantly superior result in terms of the dispersibility of the cellulose fine particles.

Moreover, in a comparison among the cellulose dispersion liquids of Trial Production Examples 1 to 4, it was shown that increasing the sodium hypochlorite concentration further increased the cationic demand, making the fibrillation of cellulose proceed more easily and effectively. When the available chlorine concentration of sodium hypochlorite was particularly 0.13% or more, the cationic demand became 4.0 μeq/gcell or more per 1 g of cellulose, and when the available chlorine concentration was more preferably 3% or more, the cationic demand became 50.0 μeq/gcell or more per 1 g of cellulose. Therefore, the dispersion liquids are suitably used as coating agents for molded products such as films.

Also, in a comparison among the cellulose dispersion liquids of Trial Production Examples 5 and 6 and the cellulose dispersion liquid of Comparative Example 3, which used as the dispersion liquid raw material the regenerated cellulose fabricated using a cellulose solvent such as an ionic liquid, the same trend was observed as in the comparison between the cellulose dispersion liquids of Trial Production Examples 1 to 4 and Comparative Examples 1 and 2. This indicates that even when a different regenerated cellulose is used as the dispersion liquid raw material, a cellulose dispersion liquid of high quality can be obtained by the production method of the present invention.

The cellulose molded bodies of Trial Production Examples 1 to 6 each exhibited a smaller average particle diameter (D50) compared with the cellulose molded bodies of Comparative Examples 1 to 3, indicating that the cellulose was well fibrillated by the micronization step. In a comparison between the cellulose molded bodies of Trial Production Examples 1 to 4 and the cellulose molded bodies of Comparative Examples 1 and 2, the average particle diameter (D50) of the cellulose molded body of Trial Production Example 1 was equal to or less than half that of the cellulose molded body of Comparative Example 1, which was not subjected to the depolymerization step, and about one-fifth that of the cellulose molded body of Comparative Example 2, which was not subjected to the depolymerization step, the micronization step, or the molding step.

Moreover, it was shown that increasing the sodium hypochlorite concentration further reduced the average particle diameter (D50), making the fibrillation of cellulose easier and more effective. When the available chlorine concentration of sodium hypochlorite was particularly 0.13% or more, the average particle diameter (D50) became 50 $\mu$m or less, and when the available chlorine concentration was more preferably 3% or more, the average particle diameter (D50) became 10 $\mu$m or less. Therefore, the cellulose molded bodies can be of good quality as cellulose beads for use in cosmetics and the like.

Also, even for the cellulose molded bodies of Trial Production Examples 5 and 6 and the cellulose molded body of Comparative Example 3, which used as the dispersion liquid raw material the regenerated cellulose fabricated using a cellulose solvent such as an ionic liquid, the cellulose molded bodies of Trial Production Examples 5 and 6, which were subjected to the depolymerization step and the micronization step, exhibited favorable results compared with the cellulose molded body of Comparative Example 3, with the average particle diameter (D50) of the cellulose molded body of Trial Production Example 5 being equal to or less than one-tenth, and that of the cellulose molded body of Trial Production Example 6 being equal to or less than one-hundredth, that of the cellulose molded body of Comparative Example 3. Therefore, it is considered that the method for producing the regenerated cellulose used as the raw material is not limited and there is no restriction on the regenerated cellulose to be used as the raw material.

Next, regarding the molecular weight distribution index (Mw/Mn), the cellulose molded bodies of Trial Production Examples 1 to 6 each exhibited a smaller value compared with the cellulose molded bodies of Comparative Examples 1 to 3, indicating that the cellulose molded bodies obtained by the production method of the present invention have a sharp molecular weight distribution and are homogeneous. In the depolymerization step, when the available chlorine concentration of sodium hypochlorite is more than 1.30%, the molecular weight distribution index (Mw/Mn) is particularly favorable.

Industrial Applicability

According to the method for producing a regenerated cellulose-derived cellulose dispersion liquid and a cellulose molded body of the present invention, a cellulose dispersion liquid or a cellulose molded body can be produced using a regenerated cellulose including cellophane or the like that is difficult to recycle as a raw material, thereby greatly contributing to the reduction of environmental burdens. Moreover, since the obtained cellulose dispersion liquid has high dispersibility of cellulose fine particles, it provides a homogeneous and high-quality result when used as a coating agent or the like. Furthermore, the cellulose molded body obtained by the production method of the present invention provides fine and homogeneous particles, making it promising as an alternative to conventional microplastics used in cosmetics or chemically modified cellulose beads, for example.

Reference Signs List

**[0083]**

　　10 method for producing a regenerated cellulose-derived cellulose dispersion liquid
　　11 cellulose dispersion liquid
　　20 method for producing a regenerated cellulose-derived cellulose molded body
　　21 cellulose molded body
　　S1 pulverization step
　　S2 depolymerization step

S3 micronization step
S4 molding step
S5 collection step

**Claims**

1. A method for producing a regenerated cellulose-derived cellulose dispersion liquid, using a regenerated cellulose as a dispersion liquid raw material, the method comprising:

   a pulverization step of pulverizing the dispersion liquid raw material;
   a depolymerization step of lowering a degree of polymerization of a pulverized raw material obtained through the pulverization step to 350 or less; and
   a micronization step of micronizing a depolymerized cellulose obtained through the depolymerization step to obtain a cellulose dispersion liquid.

2. The method for producing a regenerated cellulose-derived cellulose dispersion liquid according to claim 1, wherein a degree of polymerization of the regenerated cellulose as the dispersion liquid raw material is 600 or less.

3. The method for producing a regenerated cellulose-derived cellulose dispersion liquid according to claim 1 or 2, wherein a degree of polymerization of the pulverized raw material is lowered by sodium hypochlorite having an available chlorine concentration of 0.13% or more in the depolymerization step.

4. The method for producing a regenerated cellulose-derived cellulose dispersion liquid according to claim 1 or 2, wherein a degree of polymerization of the pulverized raw material is lowered by sodium hypochlorite having an available chlorine concentration of 3% or more in the depolymerization step.

5. A cellulose dispersion liquid, wherein a cationic demand of the cellulose dispersion liquid obtained by the production method according to claim 1 or 2 is 4.0 $\mu$eq/gcell or more per 1 g of cellulose.

6. A cellulose dispersion liquid, wherein a cationic demand of the cellulose dispersion liquid obtained by the production method according to claim 3 is 4.0 $\mu$eq/gcell or more per 1 g of cellulose.

7. A cellulose dispersion liquid, wherein a cationic demand of the cellulose dispersion liquid obtained by the production method according to claim 4 is 50.0 $\mu$eq/gcell or more per 1 g of cellulose.

8. A method for producing a regenerated cellulose-derived cellulose molded body, the method comprising a molding step of drying and molding the cellulose dispersion liquid obtained by the production method according to claim 1 to obtain a regenerated cellulose-derived cellulose molded body.

9. The method for producing a regenerated cellulose-derived cellulose molded body according to claim 8, wherein a degree of polymerization of the regenerated cellulose as the dispersion liquid raw material is 600 or less.

10. The method for producing a regenerated cellulose-derived cellulose molded body according to claim 8 or 9, wherein a degree of polymerization of the pulverized raw material is lowered by sodium hypochlorite having an available chlorine concentration of 0.13% or more in the depolymerization step.

11. The method for producing a regenerated cellulose-derived cellulose molded body according to claim 8 or 9, wherein a degree of polymerization of the pulverized raw material is lowered by sodium hypochlorite having an available chlorine concentration of 3% or more in the depolymerization step.

12. A regenerated cellulose-derived cellulose bead which is a cellulose molded body obtained by the production method according to claim 10, wherein the cellulose molded body is a cellulose bead and has an average particle diameter (D50) of 50 $\mu$m or less.

13. A regenerated cellulose-derived cellulose bead which is a cellulose molded body obtained by the production method according to claim 11, wherein the cellulose molded body is a cellulose bead and has an average particle diameter (D50) of 10 $\mu$m or less.

14. A regenerated cellulose-derived cellulose molded body which is a cellulose molded body obtained by the production method according to claim 10, wherein a molecular weight distribution index (Mw/Mn) obtained by dividing a weight average molecular weight (Mw) of the cellulose molded body by a number average molecular weight (Mn) thereof is 3.5 or less.

15. A regenerated cellulose-derived cellulose molded body which is a cellulose molded body obtained by the production method according to claim 11, wherein a molecular weight distribution index (Mw/Mn) obtained by dividing a weight average molecular weight (Mw) of the cellulose molded body by a number average molecular weight (Mn) thereof is 1.6 or less.

## Fig. 1

**EP 4 775 626 A1**

## INTERNATIONAL SEARCH REPORT

| International application No. |
|---|
| **PCT/JP2024/019694** |

| A. | CLASSIFICATION OF SUBJECT MATTER |
|---|---|

*C08J 11/16*(2006.01)i; *B29B 17/04*(2006.01)i; *C08B 16/00*(2006.01)i; *C08J 3/12*(2006.01)i; *C08L 1/00*(2006.01)i
FI:   C08J11/16; B29B17/04; C08B16/00; C08J3/12 A CEP; C08L1/00

According to International Patent Classification (IPC) or to both national classification and IPC

| B. | FIELDS SEARCHED |
|---|---|

Minimum documentation searched (classification system followed by classification symbols)

C08J11/16; B29B17/04; C08B16/00; C08J3/12; C08L1/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 3-163135 A (ASAHI KASEI KABUSHIKI KAISHA) 15 July 1991 (1991-07-15)<br>p. 3, lower left column, line 20 to p. 10, lower left column, line 14 | 1-15 |
| Y | JP 2021-70747 A (ASAHI KASEI KABUSHIKI KAISHA) 06 May 2021 (2021-05-06)<br>paragraphs [0012]-[0124] | 1-15 |
| Y | JP 2022-78436 A (NIPPON PAPER INDUSTRIES CO., LTD.) 25 May 2022 (2022-05-25)<br>paragraphs [0001]-[0003] | 12-13 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 June 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

17

**INTERNATIONAL SEARCH REPORT**
Information on patent family members

International application No.

**PCT/JP2024/019694**

| Patent document cited in search report | | | Publication date (day/month/year) | Patent family member(s) | Publication date (day/month/year) |
|---|---|---|---|---|---|
| JP | 3-163135 | A | 15 July 1991 | US 5123962 A<br>column 3, line 50 to column 13, line 58 | |
| JP | 2021-70747 | A | 06 May 2021 | (Family: none) | |
| JP | 2022-78436 | A | 25 May 2022 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016537461 W